# EUROPEAN PATENT APPLICATION

(11) **EP 1 584 497 A2**
(43) Date of publication of application: **12.10.2005**
(21) Application number: 05102661.5
(22) Date of filing: 05.04.2005
(51) Int. Cl.: B60C 27/14

(54) **Device to attach a snow chain to a vehicle wheel**

(30) Priority: 08.04.2004 IT MI20040703
(71) Applicant: MAGGI CATENE S.p.A., 23854 Olginate (LECCO) (IT)
(72) Inventor: Maggi, Corrado, 23896 Sirtori (Lecco) (IT); Bouvier, Jean-Pierre, 1052 Le Mont sur Lausanne (CH)
(74) Representative: Faggioni, Carlo Maria

(57) **Abstract**

A device to attach an anti-skid system to a vehicle wheel is disclosed, consisting of a series of eye-encompassing flaps (O, 2) apt to be held at least partly between the front side (F) of a tyre (P) and a corresponding holding lip (L) of the rim (C) of said vehicle wheel.

## Description

### Field of the invention

The present invention relates to a device to attach a snow chain to a vehicle wheel.

### BACKGROUND ART

As known, there are many types of anti-skid devices or snow chains for vehicles. Generally speaking, these devices can be divided into two categories: one which provides manual operation both in front and behind the tyre, to act on the connection means encompassing the whole tyre (reference can be made for example to EP 1174292 in the name of the same Applicant), another one which provides operation only on the front of the tyre, securing the device to the wheel through suitable connection means.

The present invention refers to snow chains of this latter type, which is increasingly appreciated by users because it requires very limited and simple mounting operations.

These semi-automatically fitted chains, as they will be referred to in the following, provide a series of anti-skid elements (portions of metallic chain, spiked plates, and so on), intended to lie between the tyre and the road surface to guarantee road grip, mutually connected and held on the tyre by connection arms.

The connection arms, having a varying degree of flexibility, are further joined to the vehicle wheel by variously shaped retaining means.

In certain cases, the retaining means are elastic elements lying between the wheel rim and a central body shared by the connection arms: this allows to apply the device with a stationary vehicle and to exploit the return force of the elastic elements to complete and keep the device fitted on the tyre during wheel advancement.

In other cases the retaining means are rigid, but the elasticity of the connection arms themselves is exploited to obtain the same attraction effect in the direction of the wheel.

In any case, since the tyres are of various sizes and the rim shape varies enormously, one of the designers' concerns is to identify the most suitable position - preferably a universal one - for securing retaining means.

A preferred attachment position is in correspondence of the bolts securing the wheel to the hub (reference can be made for example to PCT/IB03/02898 in the name of the same Applicant). However, this arrangement, although of common use, has technological drawbacks and mounting is rather awkward. As a matter of fact, this solution requires prior mounting, for example at the beginning of the winter season, of a specific adapter on the rim bolts; at the end of the season said adapter, which is often unattractive and a source of wheel imbalances (due to its mass), needs to be removed.

Alternatively, in the cases where the rim has lightening or aesthetic holes, use is made of simple elastic hook-shaped elements which may be applied to such holes. Reference can be made, for example, to EP 351.362 and EP 226.131.

In many respects, such as ease of mounting and manufacturing inexpensiveness, this solution is extremely advantageous. However, it cannot always be applied, because the rims often have shapes that do not provide stable attachment points, especially on modern vehicles.

It is hence an object of the present invention to provide a device to attach a snow chain to the wheel, which overcomes all the drawbacks set forth above, i.e. is technologically simple and inexpensive to manufacture and to set up and does not need to be removed from the wheel at the end of the winter season.

Such object is achieved by the device described in its essential features in the accompanying main claim.

Other inventive aspects of the invention are described in the dependent claims.

### BRIEF DESCRIPTION OF THE DRAWINGS

Further features and advantages of the device according to the invention will in any case be more evident from the following detailed description of some preferred embodiments of the same, given by way of example and illustrated in the accompanying drawings, wherein:
fig. 1 is a front elevation view of a first embodiment of the device of the invention;
fig. 2 is a cut-off side elevation view, partly in cross-section, of a portion of vehicle wheel with the device of fig. 1 installed;
fig. 3 is a front elevation view of a vehicle wheel with the device of fig. 1 installed;
figs. 4A and 4B are front elevation and side elevation views, respectively, of another embodiment of the device of the invention;
fig. 5 is a similar view to that of fig. 2 with the device of figs. 4A and 4B installed; and
fig. 6 is a similar view to fig. 3 showing the application of the device of figs. 4A and 4B.

### DETAILED DESCRIPTION OF THE CURRENTLY PREFERRED EMBODIMENTS

According to the invention, the attachment device consists of a series of substantially flat eye-encompassing flaps, shaped so as to be able to be held between the side F of a tyre P and the corresponding holding lip L of rim C of the corresponding vehicle wheel.

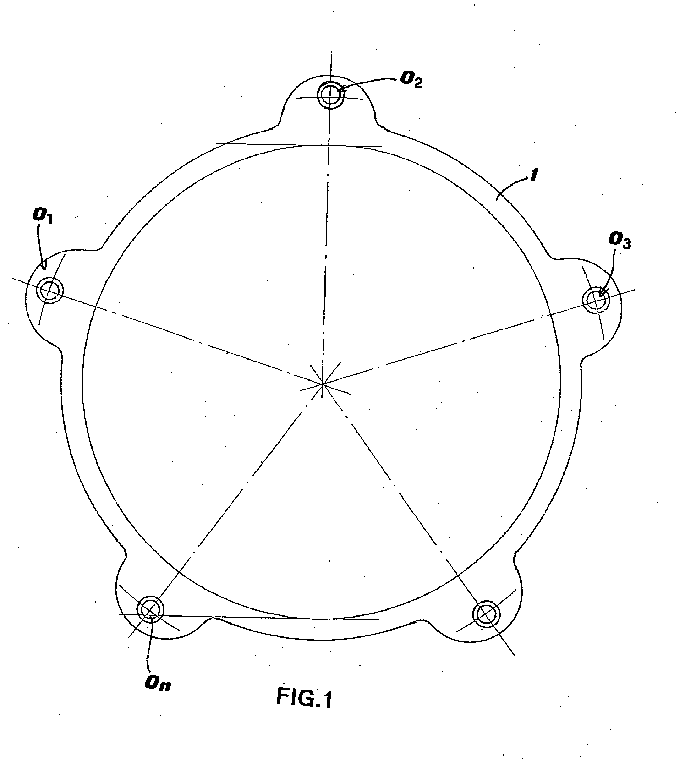

According to a first embodiment (fig. 1), a series of eye-encompassing flaps O₁₋ₙ, for example 5 thereof, protrude from the periphery of a circular crown 1, equally spaced from one another. Each eye-encompassing flap is equipped with a corresponding hole, whose function will be illustrated in detail below.

The inner diameter of circular crown 1 is substantially smaller than the maximum diameter of the holding lip L of a rim of a wheel C onto which the crown is intended to be mounted.

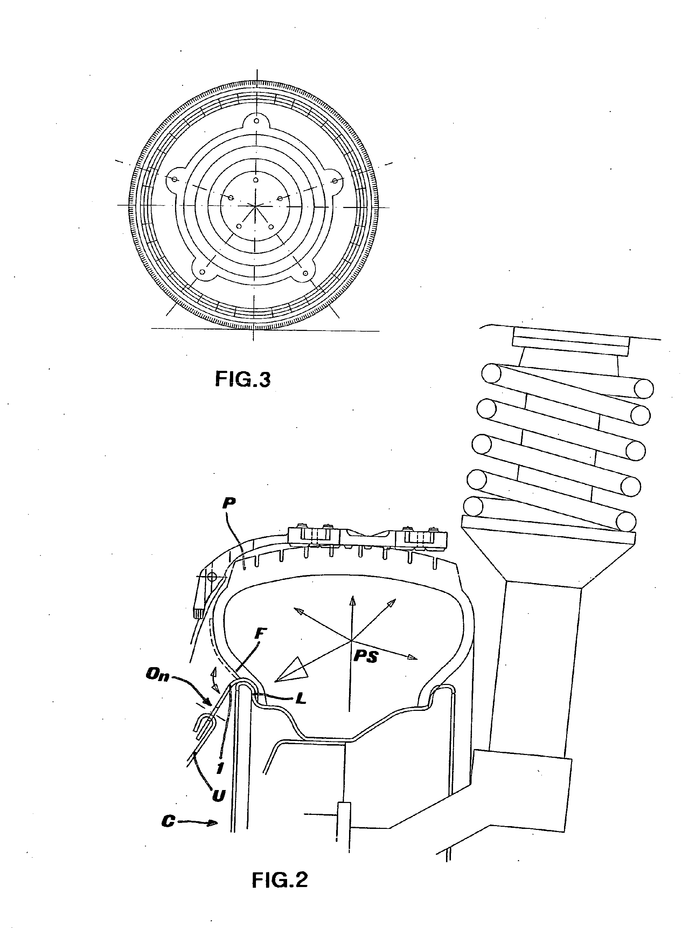

By this arrangement, the circular crown 1, equipped with corresponding eye-encompassing flaps O₁₋ₙ, can be housed partly inside rim C, adjacent to the inner surface of holding lip L (fig. 2), where it is later blocked by the side F of tyre P mounted on rim C.

The eye-encompassing flaps O₁₋ₙ, extending from crown 1, protrude from the area comprised between tyre side F and rim lip L. Therefore, the holes of eyes O₁₋ₙ remain accessible on the wheel front, i.e. on the left-hand side in fig. 2.

The thickness and the material of crown 1 are such that no excessive deviation of side F from rim C is determined, once it is installed and pressurised, and with tubeless tyres air leaks are thereby avoided.

Both for this reason and in order to ensure sufficient elasticity to crown 1 (so as to be able to partly expand said crown during installation thereof on the rim), a preferred material may be the same elastomeric material of which tyre P is made, with a thickness ranging between 1 and 5 mm also depending on material strength and deformability. A strengthening structure may be provided in correspondence of eyes O₁₋ₙ, for example a canvas matrix embedded in the thickness of crown 1 and/or a small ring of a highly resistant material placed in correspondence of the hole of each eye Oₙ.

Preferably, at least in correspondence of eye-encompassing flaps O, the material of crown 1 is flexible - in order to be able to be bent during use when required - but sufficiently stiff as to maintain a shape of its own - so as to remain substantially adhering to the tyre side (as shown by a dotted line in fig. 2) and not affect wheel appearance and overall aerodynamics.

Once crown 1 has been installed in place, the eye-encompassing flaps O₁₋ₙ represent a series of attachment points whereto the hook-shaped end U of an elastic retaining element of a snow chain can be joined, for example of the type briefly mentioned earlier.

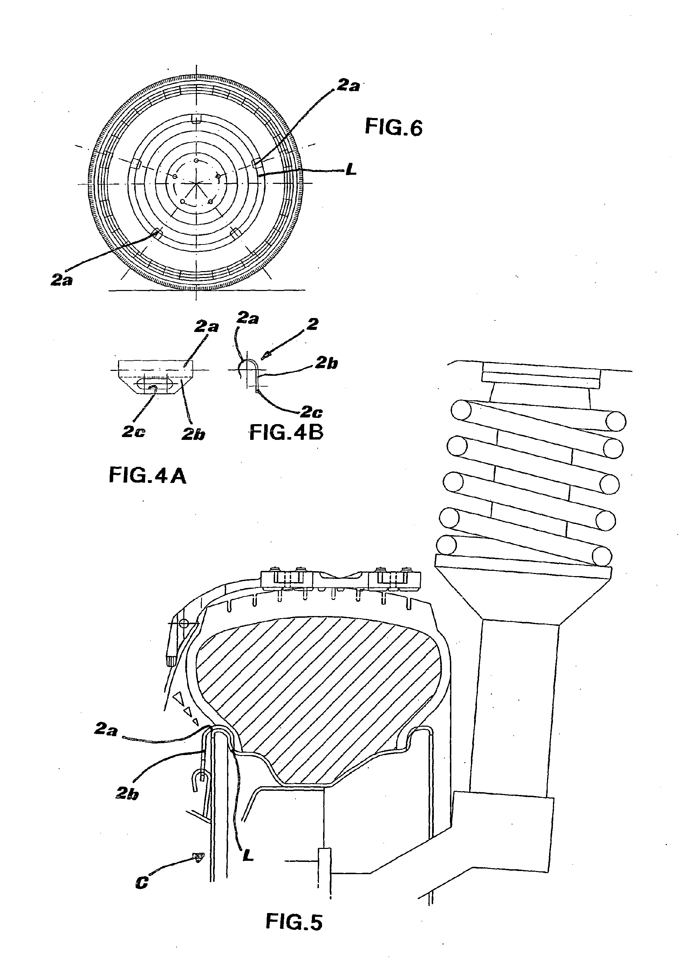

A second embodiment of the eye-encompassing flaps is illustrated in figs. 4A-6.

In this case each eye-encompassing flap is formed by a thin metallic body 2, with a joining portion 2a, bent in a U-shape, and a flap-shaped portion 2b equipped with an opening 2c.

The joining portion 2a is intended to be applied, deformed by suitable means if necessary, to the peripheral edge of the holding lip L of rim C. Since this portion is bent U-wise, the flap-shaped portion 2b protrudes from the rim radially directed towards the axis of rotation (fig. 5).

Since the eye-encompassing body 2 is made of a metallic material, in view of the moderate stress it undergoes it can be manufactured with a very limited thickness and hence the invasiveness thereof onto the tyre is virtually negligible.

Each aperture 2c further represents an optimal joining point for the retaining means of the snow chain.

Similarly to the embodiment shown above, the eye-encompassing body 2 is held pinched in position between side F of tyre P and lip L. In this case too, during the mounting step, the operator (for example the tyre dealer) provisionally secures a series of eye-encompassing bodies 2 evenly spaced along the edge of rim C, and later mounts the tyre and pressurises the same. At the end an arrangement as exemplified in fig. 6 is obtained.

Within the tyre, pressure PS causes side F to impart on lip L of the rim a force (typically, with the envisaged size of the eye-encompassing elements, of the order of 4-8 Kg) sufficient to securely hold in position the attaching device of the invention.

According to a further embodiment of the invention (not shown), the eye-encompassing flaps are integral with side F of the same tyre P. In other words, the tyre itself is equipped, during the moulding step thereof, with a series of flexible side flaps (on the front), for example made of linen-reinforced rubber, equipped with respective holes obtained during moulding or through subsequent machining.

In a preferred embodiment, the strengthening matrix of such eyes is anchored (in various ways) to the terminal ring embedded in tyre lip L.

As can be well understood, the device of the invention brilliantly achieves the objects set forth in the preamble.

As a matter of fact, it allows to attach a snow chain of the semi-automatic fitting type to the wheel through elastic retaining means, regardless of the type of wheel rim mounted on the vehicle.

Moreover, once installed in position, the device of the invention adds an extremely limited mass to the wheel and a balanced one in any case, thereby causing no vibration problem whatsoever. It further has a virtually negligible effect in terms of appearance and bulk. It can therefore be left in position for the whole life cycle of the tyre. This represents an unquestionable advantage for the user, who is no longer forced to intervene personally - at the beginning of each winter season or, worse, when needed - to mount and remove a complex adapter device.

Finally, the fixing device of the invention is extremely simple and inexpensive and therefore does not significantly affect the purchasing cost of a snow chain. On the other hand, in the tyre-integrated embodiment, it is formed during the serial manufacturing process of the tyre, with even lower costs.

However, it is understood that the invention is not limited to the specific embodiments illustrated above, which merely represent non-limiting examples of the scope of the invention, but that a number of variants are possible, all within the reach of a person skilled in the field, without departing from the scope of the invention.

For example, although a crown 1 in a single piece has been exemplified, according to the main teaching provided herein it may be envisaged that said crown is interrupted in one point and may be joined by various means (glue, vulcanisation or other), once it is arranged in the rim before mounting the tyre.

## Claims

1. A device to attach an anti-skid system to a vehicle wheel, **characterised in that** it consists of a series of eye-encompassing flaps (O, 2) apt to be held at least partly between the front side (F) of a tyre (P) and a corresponding holding lip (L) of the rim (C) of said vehicle wheel.

2. The device as in claim 1), wherein said eye-encompassing flaps (O) extend integrally from a thin circular crown (1), intended to be arranged between said side (F) and said rim lip (L) .

3. The device as in claim 2), wherein the inner diameter of said circular crown (1) is smaller than the maximum diameter of said rim lip (L).

4. The device as in claim 2) or 3), wherein at least said crown (1) is made of a partly stretchable material.

5. The device as in claim 4), wherein strengthening of the material is provided in correspondence of said eye-encompassing flaps.

6. The device as in claim 1), wherein said eye-encompassing flaps are each shaped as a metal body (2), equipped with a U-shaped attachment portion (2a) and with a flap-shaped portion provided with an aperture (2c), intended to be mounted on the edge of said rim lip (L) and at least partly tightened there between said front side (F) of the tyre (P) and said lip (L).

7. The device as in claim 1), wherein said eye-encompassing flaps are integral with the tyre side (F).

8. The device as in claim 1), wherein said flaps are obtained in the radially innermost part of the tyre front side (F).

9. Tyre for road vehicle, **characterised in that** it comprises a series of eye-encompassing flaps (0, 2) integral with its front side (F) and apt to project from the engagement location with the holding lip (L) of a corresponding rim (C) of the vehicle wheel.
